# EUROPEAN PATENT APPLICATION

(11) **EP 0 867 110 A1**
(43) Date of publication of application: **30.09.1998**
(21) Application number: 98200638.9
(22) Date of filing: 02.03.1998
(51) Int. Cl.: A01J 25/15, A01J 25/11

(54) **Backplate assembly for a cheese pressing vat**

(30) Priority: 27.03.1997 FI 971309
(71) Applicant: Tetra Pak Tebel OY, 04400 Järvenpää (FI)
(72) Inventor: Granberg, Carl-Gustav, 04170 Paippinen (FI)
(74) Representative: Heinänen, Pekka Antero

(57) **Abstract**

The invention relates to backplate assembly (6) suited for use in a cheese pressing vat, in which pressing vat the curd together with the whey, or alternatively, without the whey, is pressed into an essentially solid cheese mat, said pressing vat comprising a bottom, side plates, a discharge-end backing plate and a backplate (6), said backplate being located at the infeed end of the curd (and the whey) and said bottom being covered with a web such as a polymer fabric adapted longitudinally movable on the bottom of said pressing vat, and in which pressing vat system above the pressing vat is adapted a pressing means with a pressing area essentially equal to the bottom area of the pressing vat, the pressing surface of said pressing means being at least essentially planar. The invention is implemented by adapting said backplate assembly (6) into the pressing vat so as to be movable in the longitudinal direction of the pressing vat and by providing said backplate assembly with an actuator (8, 9) serving to adjust the backplate assembly (6) to a suitable height between its maximum and minimum positions.

## Description

The present invention relates to a backplate assembly suited for use in a cheese pressing vat, in which pressing vat the curd together with the whey, or alternatively, without the whey, is pressed into an essentially solid bed of curd, said pressing vat comprising a bottom, side plates, a discharge-end backing plate and a backplate, said backplate being located at the infeed end of the curd (and the whey) and said bottom being covered with a web such as a polymer fabric adapted longitudinally movable on the bottom of said pressing vat, and in which pressing vat system above the pressing vat is adapted a pressing means with a pressing area essentially equal to the bottom area of the pressing vat, the pressing surface of said pressing means being at least essentially planar.

As known, cheesemaking comprises heating of rennetted milk in a cheese vat, whereby the milk is coagulated into curd (mass of curd) and whey during the heating operation. From the cheese vat, the curd is passed via a piping into a pressing vat. Typically, the pressing vat is shaped into an elongated, advantageously rectangular tub with an essentially flat bottom. Immediately above the vat bottom is advantageously adapted a polymer fabric or similar conveyor wire which is aligned essentially horizontally flat and is made movable in the longitudinal direction of the vat. The side walls of the pressing vat are formed by side walls aligned essentially perpendicular to the vat bottom. In the longitudinal direction, the pressing vat can be defined to have two ends: the infeed end and the discharge end. While the curd delivery can be performed from above the vat by means of a distributor, whose longitudinal reciprocating movement above the vat spreads the curd (with or without whey) very evenly into the vat. In such an arrangement, the vat infeed end is defined as the vat end opposite to the discharge end. The cheese pressing proper takes place with the help of a pressing means with a length and width essentially equal to those of the cheese pressing vat and the pressing means having been made essentially planar from its underside surface pressing (facing) the curd.

Conventionally, the pressing vat has a fixed length, i.e., is equipped with fixed infeed and discharge ends. However, in certain cases it is desirable that the length of the curd bed to be pressed could be varied by the cheese variety being manufactured. Herein, the use of an "intermediate" wall in the pressing vat might be contemplated with a construction suitable for limiting the length of said curd bed to a desired dimension. Such an intermediate wall must be made so high that no curd or whey can escape over said intermediate wall when the curd and whey are being fed into the vat. On the other hand, a sufficiently high intermediate wall causes problems in the curd pressing step, because the pressing means is conventionally adapted to press over the entire length of the vat, whereby the intermediate wall sets an obstacle to the pressing step. Naturally, the pressing means could be designed to have some kind of length adjustment, but such an adjustable construction would be complicated and expensive.

A more attractive construction is such that has the height of the intermediate wall made variable so that the height of the intermediate wall is greatest during the delivery of the curd and undergoes height contraction during the curd pressing step until reaching its smallest height at the end of the pressing step. Such constructions which are known in the art, however, have been found clumsy to manage as the intermediate wall must be located manually in its place. Furthermore, the intermediate wall must also be elevated manually into its highest position. Moreover, the intermediate walls must be washed separately from the other equipment, which causes a greater number of manual operations and thus increases the cheesemaking costs.

It is an object of the present invention to provide an entirely novel type of "intermediate" wall (later in the text called a "backplate assembly"), free from the abovedescribed shortcomings. The backplate assembly according to the invention is characterized in that said backplate assembly is adapted into the pressing vat so as to be movable in the longitudinal direction of the pressing vat and that said backplate assembly is provided with an actuator serving to adjust the backplate assembly to a suitable height between its maximum and minimum height positions.

An embodiment of the invention is characterized in that the backplate height adjustment is implemented by virtue of at least two sets of concentric, telescopic actuator cylinders, said cylinder sets being located essentially close to the ends of said backplate assembly, one telescopic cylinder set being located at either end of the backplate assembly.

Another embodiment of the backplate assembly according to the invention is characterized in that to each corresponding cylinder of said telescopic cylinder sets is connected an elongated planar element formed by an essentially vertical plate, said planar elements as a set acting in said backplate assembly as a backing surface against which the curd (with or without the whey) rest in the pressing vat.

A still another embodiment of the backplate assembly according to the invention is characterized in that said planar elements are staggered with respect to each other so that, during the telescoping movement of the concentric cylinders, the planar elements will be superimposed in a staggered manner thus allowing the height contraction of the backplate assembly.

The principal benefits of the invention include automatic and secured function of the backplate as well as compatibility of the backplate with circulating-water washing performed simultaneously with the washing of the other equipment of the cheesemaking line. This washing compatibility is particularly facilitated by a purpose-designed leakage provided between the mating surfaces of the telescopic cylinders, whereby the circulating washing water can flush the smallest gaps without the need for a an expensive and time-consuming washing operation to be performed separately from the washing of other equipment.

In the following, the invention will be described in greater detail with reference to the appended drawings, in which
Figure 1 shows a schematic diagram of a section of a cheesemaking line;
Figure 2 shows a top view of a curd pressing vat equipped with a backplate assembly according to the invention;
Figure 3 shows the backplate assembly according to the invention elevated into its upper position;
Figure 4 shows the backplate assembly according to the invention contracted into its lowest position; and
Figure 5 shows a top view of the backplate assembly according to the invention.

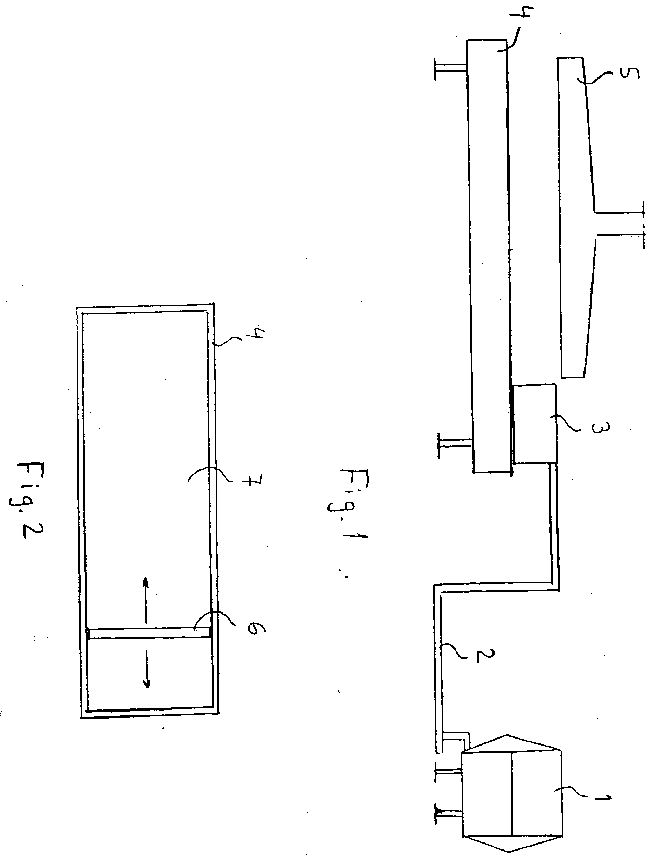

Referring to Fig. 1, therein is shown a rather simplified section of a cheesemaking line. The scaling of the different elements may deviate from those of practical equipment. The only diagrammatic function of Fig. 1 is to elucidate the section of a cheesemaking line to which the present invention is related. Reference numeral 1 designates a cheese vat in which the rennetted milk is coagulated by heating into curd and whey. The mixture of these components is pumped along a piping 2 into a feed/distributor device 3, and therefrom further into a pressing vat 4. The pressing of the curd (with or without whey) is implemented with the help of a pressing means 5 arranged by conventional methods to be vertically actuated. The width and length of the pressing underside surface of the pressing means 5 are made essentially equal to the effective internal width and length of the pressing vat 4.

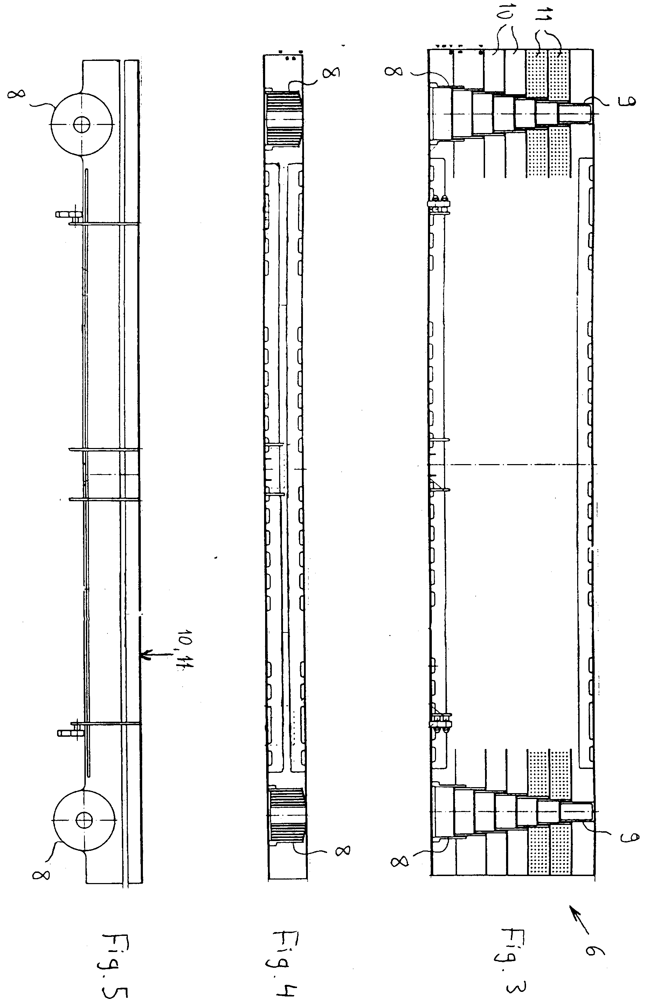

The invention concerns the backplate 6 of the pressing vat 4 (refer to Fig. 2), said backplate being located in the pressing vat so as to extend essentially over the entire width of the pressing vat. In a preferred embodiment, the backplate 6 is connected by its lower edge to the bottom fabric 7 of the pressing vat 4 so as to move along with the fabric in the longitudinal direction of the pressing vat as shown by the arrows in the diagram.

In Fig. 3 is shown the rear side of the backplate assembly according to the invention. The height of the backplate assembly is not constant, but rather, can be actuated between its fully extended position (refer to Fig. 3) and its fully retracted position (refer to Fig. 4). Obviously, the backplate assembly must be actuated into its upper position particularly during the filling step of the vat, whereby a low backplate height would not be sufficient to keep the curd with the whey possibly mixed therewith in a desired manner in the press space. The vertical height control of the backplate 6 is implemented by means of telescopic cylinders 8 adapted close to the ends of the backplate. The lowermost cylinder in the telescoping set has the largest diameter and the diameters of the higher-rising cylinders are stepwise reduced so that the highest-rising cylinder 9 has the smallest diameter. To the upper and lower edge (at the outside rims) of each cylinder is made a collar or similar stop serving to prevent the cylinders from slipping apart from each other. The cylinders are made open at their lower and upper ends, or at least provided with holes, whereby the pressurized water, which is passed into the telescopic cylinder actuator via the lowermost cylinder in order to drive the cylinders into the upper extended positions, can enter the cylinders thus exerting an elevating output force. However, the top of the uppermost cylinder 9 must obviously be made closed to achieve the desired elevating output force. The intercylinder clearances are intentionally made so wide that the pressurized water can undergo a controlled leakage via these clearances. For the washing of the backplate 6 in particular, this is a very advantageous embodiment. This is because the leaking water also simultaneously flushes the intercylinder clearances clean from contaminating dirt.

Separately to each cylinder of the actuator means is connected an elongated planar element 10, 11 formed by an essentially vertical plate, said planar elements as a set acting in the backplate assembly 6 as a backing surface against which the curd (with or without whey) rest in the pressing vat. The elongated planar elements 10, 11 are staggered with respect to each other so that, during the telescoping movement of the concentric cylinders, the planar elements will be superimposed in a staggered manner thus allowing the height contraction of the backplate assembly 6. Advantageously, at least one planar element is provided with holes forming a sieve plate 11 in order to control the level of whey to a desired maximum height.

The function of the backplate assembly 6 is initiated as follows: prior to the filling of the pressing vat 4 with the curd possibly still containing the whey, the operating length of the pressing vat is determined according to the cheese variety to be pressed and the packaging dimensions thereof, after which the backplate assembly 6 can be driven into its correct position. In practice, the correct positions of the backplate assembly 6 in the longitudinal direction of the pressing vat are stored in the control system memory, whereby the selection of a desired cheese variety immediately initiates an automatic transfer of the backplate assembly into its correct position.

In this phase, the backplate assembly 6 is in its upper position as shown in Fig. 3. Next, the pressing vat is filled via a distributor device 3 as smoothly as possible to a desired level with the mass of curd (possibly containing whey). The excess whey escapes the press space via the sieve plate(s) 11. After the completion of the filling step, the pressing step is carried out with the help of pressing means 5 (refer to Fig. 1) having an essentially planar pressing underside surface. Simultaneously, the pressing means actuates the vertical contraction of the backplate assembly 6 (refer to Fig. 4), whereby the cylinders 8, 9 will telescopingly retract and the stepwise-staggered planar elements 10, 11 of the backplate will slide into a mutually staggered, superimposed position.

After the pressing step, the pressed cheese mat is removed from the vat in a conventional manner by moving the polymer fabric 7 on the vat bottom to the left as shown in Fig. 2, whereby the pressed cheese mat is transferred via the discharge end of the vat to the packaging section of the production line. Subsequent to the vat emptying step, the discharge-end backplate assembly is driven into its rearmost position, whereby it is automatically connected to the pressurized water line that starts to fill the cylinders 8, 9 with pressurized water. This causes the actuation of the cylinders until they are again driven into their upper positions (refer to Fig. 3). To enhance the actuation speed of the cylinders or to possibly keep them in their upper positions after the cutoff of the pressurized water supply, the interior of the cylinder set may be provided with a coiled spring (not shown in the diagrams) that forces the cylinders into their fully extended positions with a given expansion force. During the actuation of the cylinders with the feed of pressurized water into the interior of the cylinders, the water can leak via the intercylinder clearances thus accomplishing the washing of the cylinders and improving the hygienics of the pressing vat operation.

To a person versed in the art it is obvious that the invention is not limited by the exemplifying embodiments described above, but rather, may be varied within the scope and spirit of the appended claims. For instance, the number of the cylinder sets is not limited in two, since any number of cylinder sets and location thereof may be contemplated as well.

## Claims

1. A backplate assembly (6) suited for use in a cheese pressing vat (4), in which pressing vat the curd together with the whey, or alternatively, without the whey, is pressed into an essentially solid cheese mat, said pressing vat comprising a bottom, side plates, a discharge-end backing plate and a backplate (6), said backplate being located at the infeed end of the curd (and the whey) and said bottom being covered with a web (7) such as a polymer fabric adapted longitudinally movable on the bottom of said pressing vat, and in which pressing vat system above the pressing vat (4) is adapted a pressing means (5) with a pressing area essentially equal to the bottom area of the pressing vat, the pressing surface of said pressing means being at least essentially planar, **characterized** in that said backplate assembly (6) is adapted into the pressing vat (4) so as to be movable in the longitudinal direction of the pressing vat and that said backplate assembly is provided with an actuator (8, 9) serving to adjust the backplate assembly (6) to a suitable height between its maximum and minimum positions.

2. A backplate assembly as defined in claim 1, **characterized** in that the height adjustment of said backplate (6) is implemented by virtue of at least two sets of concentric, telescopic actuator cylinders (8, 9), said concentric cylinder sets being located essentially close to the ends of said backplate assembly (6), one cylinder set being located at either end of the backplate assembly.

3. A backplate assembly as defined in claim 2, **characterized** in that to each corresponding cylinder (8, 9) of said telescopic cylinder sets is connected an elongated planar element (10, 11) formed by an essentially vertical plate, said planar elements as a set acting in said backplate assembly as a backing surface against which the curd (with or without whey) rest in the pressing vat (4).

4. A backplate assembly as defined in claim 3, **characterized** in that said planar elements (10, 11) are staggered with respect to each other so that, during the telescoping movement of the concentric cylinders (8, 9), the planar elements will bed superimposed in a staggered manner thus allowing the height contraction of the backplate assembly (6).

5. A backplate assembly as defined in claim 2 or 3, **characterized** in that at least one planar element is provided with holes forming a sieve plate (11) in order to control the level of whey to a desired maximum height.

6. A backplate assembly as defined in any of foregoing claims 2-5, **characterized** in that said cylinders (8) are made open at their lower and upper ends, whereby in the fully retracted position of the backplate assembly (6), the lower rim of each telescoping cylinder will remain essentially flush with the lower rim of the lowermost cylinder.

7. A backplate assembly as defined in any of foregoing claims 2-6, **characterized** in that the top of the uppermost cylinder (9) is made closed and that the telescopic cylinder set is actuated into its upper position with the help of pressurized water through feeding the water from below into the interior of the telescoping set of cylinders.

8. A backplate assembly as defined in claim 7, **characterized** in that the intercylinder clearances between the concentric cylinders (8, 9) are intentionally made so wide that the pressurized water can undergo a controlled leakage via these clearances.
